# EUROPEAN PATENT APPLICATION

(11) **EP 1 870 185 A1**
(43) Date of publication of application: **26.12.2007**
(21) Application number: 06714890.8
(22) Date of filing: 28.02.2006
(51) Int. Cl.: B23B 27/14, B23B 27/20, C22C 29/16

(54) **cBN SINTERED COMPACT AND CUTTING TOOL USING THE SAME**

(30) Priority: 14.04.2005 JP 2005116557
(71) Applicant: Sumitomo Electric Hardmetal Corp., Itami-shi, Hyogo 664-0016 (JP)
(72) Inventor: KUKINO, Satoru, Sumitomo Electric Hardmetal Corp., Itami-shi, Hyogo 664-0016 (JP); OKAMURA, Katsumi, Sumitomo Electric Hardmetal Corp, Itami-shi, Hyogo 664-0016 (JP); FUKAYA, Tomohiro, Sumitomo Electric Hardmetal Corp, Itami-shi, Hyogo 664-0016 (JP)
(74) Representative: Cross, Rupert Edward Blount
(86) International application number: PCT/JP2006/303760
(87) International publication number: WO 2006/112156

(57) **Abstract**

The present invention provides a high strength, high wear-resistant cBN sintered body with excellent wear resistance and chipping resistance in high-speed, high-efficiency cutting of hard, hard-to-cut, iron-based materials, and a cutting tool that makes use of this cBN sintered body.

A cBN sintered body containing cBN component of at least 45 wt% and not more than 99.9 wt%, wherein said cBN sintered body comprises carbon at least 0.001 wt% and not more than 0.15 wt% with respect to the cBN component, in an interior of cBN particles of the cBN sintered body and at a grain boundary between cBN particles, and a cutting tool in which this cBN sintered body is used for at least a portion involved in cutting.

## Description

### TECHNICAL FIELD

This invention relates to a cBN sintered body with excellent wear resistance and chipping resistance in the high-speed, high-efficiency cutting of hard, hard-to-cut, iron-based materials, and to a cutting tool that makes use of this cBN sintered body.

### BACKGROUND ART

Compared to conventional cutting tool materials such as carbide tools, cBN sintered body cutting tools offer better material performance that affords a longer tool life and higher efficiency, which are attributable to the hardness and chemical stability of a cBN sintered body, and also have excellent flexibility that far surpasses that of a grinding tool, and achieves environmental-friendly production. Therefore, cBN sintered body cutting tools have been replacing grinding in the machining of hard-to-cut iron-based materials, and particularly the working of hardened steel. cBN sintered materials are categorized into two types, one of which is composed of binder materials in which the cBN content is high and the cBN particles are bonded together with the binder materials composed mainly of cobalt or aluminum as discussed in Patent Document 1, and the other of which has a relatively low cBN content and the cBN particles are bonded via a titanium ceramic with excellent wear resistance as discussed in Patent Document 2. These types are respectively suited to the cutting of iron-based sintered parts and hardened steel.

Patent Document 3 disclosed that a high-purity cBN sintered body, in which oxygen, metals such as aluminum and the like were considered as impurities, and the content of these impurities was kept to an absolute minimum, had excellent mechanical properties and cutting performance. It was reported that a cBN sintered body composed of high-purity cBN particles had excellent cutting performance.

Nevertheless, in the cutting of iron-based sintered bodies containing a large quantity of hard particles and having an Hv (Vickers hardness) of at least 2.5 GPa, or in the carburized layer removal of a hardened steel carburized layer with an HRc (Rockwell C scale hardness) of 40 to 62, or in the finish cutting of hardened steel gears or components having bolt holes or notches with an HRc (Rockwell C scale hardness) of over 58, abnormal wear or sudden chipping occurred with conventional cBN sintered body cutting tools, so reliability was inadequate for stable, continuous machining, and therefore there are still some machining applications that must rely on grinding.
Patent Document 1: Japanese Patent Publication No. S52-43486
Patent Document 2: Japanese Patent Publication No. S53-77811
Patent Document 3: Japanese Patent Publication No. H7-291732

### DISCLOSURE OF THE INVENTION

It is an object of the present invention to provide a cBN sintered body with excellent wear resistance and chipping resistance in high-speed, high-efficiency cutting of hard, hard-to-cut, iron-based materials, and a cBN sintered tool that makes use of this cBN sintered body.

Because of the poor reliability of the above-mentioned conventional cBN sintered tools, the inventors conducted in-depth research into the mechanism by which the blade inserts of cBN sintered tools were damaged in uses that they were not applied to. As a result, they concluded that in the continuous machining of hard, hard-to-cut materials such as hardened steel, unlike the typical wear mechanism that mainly involved chemical reaction with iron, the primary factor was a mechanical damage mechanism, such as crushing due to inadequate strength of the cBN particles themselves, or the accumulated drop-out of cBN particles due to inadequate bonding strength between the cBN particles.

As discussed above, cBN sintered bodies composed of high-purity cBN particles were considered conventionally to have excellent cutting performance. As a result of painstaking research by the inventors, however, it was found that adding a very small amount of carbon to a cBN sintered body actually increased the bonding strength between cBN particles and the strength of the cBN particles themselves, which led to the discovery of the cBN sintered body of the present invention having stable, long-term cutting performance in applications such as high-load machining of hardened steel or hard sintered components.

Specifically, the present invention is as follows.
(1) A cBN sintered body containing cBN component of at least 45 wt% and not more than 99.9 wt%,
   wherein said cBN sintered body comprises carbon of at least 0.001 wt% and not more than 0.15 wt% with respect to the cBN component, in an interior of cBN particles of the cBN sintered body and at a grain boundary between the cBN particles.
(2) The cBN sintered body according to (1) above, comprising a structure in which the cBN component is three-dimensionally bonded together.
(3) A cutting tool, wherein the cBN sintered body according to (1) or (2) above is used for at least a portion involved in cutting.

The sintered body of the present invention was closely analyzed, which revealed that carbon was incorporated in an amount of at least 0.001 wt% and no more than 0.15 wt% with respect to the cBN component in the sintered body, in the interior of the cBN particles and at the grain boundary where the cBN particles form bonds. Specifically, sites where carbon atoms were incorporated among the B-N lattices of the cBN particles or were incorporated into the cBN particles by replacing boron and nitrogen atoms were observed. In a conventional cBN sintered body, an amorphous phase or oxides of boron and nitrogen were observed at many places in the grain boundary where the cBN particles formed bonds, whereas in the sintered body of the present invention, almost no oxides or amorphous phase was observed at the grain boundary between cBN particles, and instead either the cBN particles were bonded directly together, or almost everything was a region of the formation of B-C-N compounds supposed to be carbonitrides of boron such as BC₂N and BCN.

As a result of this analysis, it is concluded that because carbon infiltrates the interior of cBN particles then the cBN particles undergo solid solution strengthening or compression stress is applied to the particle surface, and also because, as for the bonding between cBN particles, either oxides that would hinder bonding between cBN particles are less likely to form or a carbonitride of boron has the excellent mechanical properties, the cutting performance of the cBN sintered tool of the present invention is improved.

### EFFECT OF THE INVENTION

The cBN sintered body of the present invention contains cBN component of at least 45 wt% and no more than 99.9 wt%, and is characterized in that said cBN sintered body comprises carbon of at least 0.001 wt% and no more than 0.15 wt% with respect to the cBN component, in the interior of the cBN particles of the cBN sintered body and at the grain boundary between cBN particles. This results in excellent strength of the cBN particles themselves that form the cBN sintered body, and in excellent bonding strength between the cBN particles. Accordingly, a tool in which the cBN sintered body of the present invention is used for the portion involved in cutting will have the excellent strength and hardness of the cBN sintered body, and will therefore be greatly improved in terms of chipping resistance and wear resistance comparing to those of a conventional cBN sintered tool.

### BEST MODE FOR CARRYING OUT THE INVENTION

The cBN sintered body of the present invention contains cBN component of at least 45 wt% and no more than 99.9 wt%, and is characterized in that said cBN sintered body comprises carbon of at least 0.001 wt% and no more than 0.15 wt% with respect to the cBN component, in the interior of the cBN particles of the cBN sintered body and at the grain boundary between cBN particles. The remainder may include a binder material whose starting material is a nitride or carbide of a Group 4a, 5a or 6a element typified by TiN or TiC, or a ceramic component composed of a solid solution of these, or a metal component typified by aluminum or cobalt, and oxygen may be contained as an unavoidable impurity.

If the cBN component is contained in an amount of less than 45% in the cBN sintered body, the cBN component will account for a smaller proportion of the cBN sintered body, so the region where the cBN particles can come into contact with each other will reduce, and adequate bonding between the cBN particles will not be formed.

When a binder material is used, the amount of cBN component in the cBN sintered body can be quantified from the amounts of the various elements in the produced sintered body by quantification by gas analysis and high-frequency plasma emission spectroscopy (hereinafter abbreviated as IPC), and from the amount of boron in the cBN component obtained by removing the binder materials in the sintered body by acid treatment. When no binder material is used, the sintered body is acid treated to remove any free carbon or the like adhering to the surface, after which the oxygen content and carbon content are quantified by ICP, and the remainder can be regarded as the cBN component.

As mentioned above, the carbon contained at the grain boundary of bonds among cBN particles and in the interior of the cBN particles of the cBN sintered body refers to the carbon contained among the B-N atom lattices of the cBN particles, or contained in the cBN particles by replacement of boron and nitrogen atoms. When a binder material is used, the amount of this carbon contained can be determined by: removing the binder material of the cBN sintered body by acid treatment; then removing any free carbon adhering to the surface by acid treatment; and measuring the amount of carbon contained in the resulting cBN component by ICP. When no binder material is used, any free carbon adhering to the surface is removed by acid treatment, and the amount of carbon contained in the resulting cBN component is measured by ICP.

If the amount of carbon is over 0.15% with respect to the weight of cBN component, an excess carbon component will be present in the cBN particles, and both wear resistance and chipping resistance will decrease. The amount of carbon contained in the interior of the cBN particles and at the grain boundary of the bonds among cBN particles is preferably at least 0.007% and no more than 0.03% with respect to the weight of cBN component.

The method for adding the above-mentioned carbon in order to strengthen the cBN particles themselves that form the cBN sintered body of the present invention and to increase the bonding strength of the cBN particles is: cBN particles containing carbon is synthesized by using a carbon-containing hBN as a starting material, and these may be used to obtain a sintered body; or, melamine (C₃N₆H₆) or a polyamide ([-NH(CH₂)₅CO-]ₙ) or another organic substance is added to an hBN or cBN raw material powder, or to an hBN-binder material or cBN-binder material mixed powder, a starting material as this product to obtain a cBN sintered body containing carbon in an amount of at least 0.001 wt% and no more than 0.15 wt% with respect to the weight of the cBN component is obtained by controlling a heat treatment temperature, time and atmosphere according to the mixed composition, and the starting material may be used to obtain the sintered body.

When a ceramic component such as TiN or TiC, or a metal component is used as a binder material in the starting materials, carbon may be added beforehand to a catalyst component such as LiCaBN₂ or Mg₃BN₃ or a metal such as aluminum, cobalt, lithium or magnesium capable of forming bonds between cBN particles, so that the amount of carbon after sintering will be at least 0.001 wt% and no more than 0.15 wt% with respect to the weight of the cBN component. For instance, the above-mentioned catalyst component and a carbon powder with poor crystallinity such as carbon black or mesophase carbon with a particle size of 0.1 µm or less may be heat treated in advance, so that the carbon component is included as a solid solution in the catalyst component, or, in the case of a fine carbon powder on the order of nanometers such as carbon nanotubes, the powder may just be mixed with the above-mentioned catalyst component without heat treatment. The sintered body of the present invention can also be obtained by using as starting materials a catalyst component that contains carbon, and hBN or cBN particles.

Adding a suitable amount of carbon prior to sintering, as in the present invention, prevents the production of free carbon or an amorphous phase that impedes strong bonding at the grain boundary where the cBN particles are in contact with each other. By this function, in the cBN sintered body of the present invention in which the proportion of cBN component is over 52 wt% and the contact ratio among the cBN particles is greater, strong bonds that bring a three-dimensional skeleton structure are formed among the cBN particles, and this allows a sintered body with even better strength and toughness to be obtained.

Any conventional sintering method can be employed here, but sintering at a high temperature over 1800°C is particularly favorable.

### EXAMPLES

The present invention will now be described in further detail through examples.

### Example 1

A binder material powder and a cBN powder with an average particle size of 2 µm were prepared. This binder material powder was produced by mixing 60 wt% of Co, 30 wt% of Al, and 10 wt% of WC. A melamine powder was mixed into this binder material and cBN powder using a cemented carbide pot and ball, in the amount and under the heat treatment conditions listed in Table 1.
This mixed powder was put into a cemented carbide container to fill up, and the contents were sintered for 30 minutes at a pressure 7.0 GPa and a temperature of 1820°C. This sintered body was analyzed by X-ray diffractometry, then, cobalt compounds, aluminum compounds and the like were identified besides the cBN in all the samples.

Table 1 shows cBN sintered bodies produced by varying the heat treatment conditions and the proportions of cBN powder, binder material powder, and melamine as a carbon source. Each of the cBN sintered bodies thus produced was analyzed by gas analysis and high-frequency plasma emission spectroscopy (hereinafter abbreviated as ICP) to quantify the various elements. Next, each of these cBN sintered bodies was placed in a sealed vessel and treated with hydrofluoric nitric acid obtained by mixing 10 ml of hydrofluoric acid having a concentration of at least 45% and less than 50% with 40 ml of two times diluted nitric acid having a concentration of at least 60% and less than 65%, for 48 hours, at a temperature of at least 120°C but less than 150°C, then the treatment gave a residue component and a solution component. The boron content in the residue component was quantified by ICP, and the cBN component content was quantified from the amount of boron in the residue component and the amounts of each element mentioned above. This residue was analyzed by X-ray diffractometry, but no cobalt, aluminum, or tungsten compounds were identified in the residue from any of the samples. A part of the residue was then treated with concentrated sulfuric acid for 5 hours at about 200°C in a sealed vessel to remove any free carbon adhering to the residue surface, and the carbon present in the interior of the cBN component in the residue, or at the grain boundary among cBN components, was quantified by ICP, and the amount of carbon with respect to the cBN component was determined.

In Table 1, the cBN content refers to the proportion of cBN component contained after sintering, while the melamine content refers to the amount of melamine added to the mixed powder prior to sintering.
The sintered body of sample number 15 was a cBN sintered body to which no melamine powder was added.

Cutting tools having each cBN sintered body of the different compositions numbered 1 to 15 in Table 1 for the surface involved in cutting were prepared, and cutting was evaluated under the following conditions.
The cutting tools used in this example had an insert shape classified as CNMA 120408 under the ISO numbering system, and the blade insert of each tool was chamfered to a width of 0.13 mm at an angle of -25° , the cutting edge inclination angle was -5° , the side rake angle was -5° , the front clearance angle was 5° , the side clearance angle was 5° , the end cutting edge angle was 5° , and the side cutting edge angle was -5° .
The Knoop hardness and transverse strength were also measured to gauge the mechanical properties of each sample. A test piece for the measurement that was 6 mm long, 3 mm wide, and 0.4 to 0.45 mm thick was cut from the sintered body, and the transverse rupture strength was measured by three-point flexural strength measurement at a span of 4 mm.
Workpiece: a rotor part made of SMF 4040 (JIS Z 2550), an iron-based sintered material, was subjected to interrupt cutting of the end face
Hardness of the workpiece: Hv 2.5 GPa
Cutting speed: V = 200 m/min
Cutting depth: d = 0.3 mm
Feed: f = 0.12 mm/rev
Coolant: none

In this cutting application, flank wear occurs as a result of accumulated drop-out of cBN particles, which is supposed to be due to inadequate bonding strength between the cBN particles, and this ultimately results in chipping and the tool reaches the end of its tool life.
With all the tools, flank wear was measured 45 minutes after the start of cutting, and the end of tool life was deemed the point when chipping of at least 0.030 mm occurred at the cutting edge. These results are given in Table 1.

**Table 1**

| Smpl. No. | cBN content | Melamine content | Heat treatment conditions | | Carbon content after acid treatment | Flank wear | Tool life | Hard ness | Transverse rupture strength |
|---|---|---|---|---|---|---|---|---|---|
| | wt% | wt% | Atmosphere | Temperature, time | wt% | mm | min | GPa | GPa |
| 1 | 45 | 5 | vacuum | 800°C, 30 min | 0.008 | 0.145 | 80 | 35 | 1.5 |
| 2 | 65 | 5 | vacuum | 800°C, 30 min | 0.008 | 0.140 | 90 | 38 | 1.6 |
| 3 | 85 | 5 | vacuum | 800°C, 30 min | 0.008 | 0.125 | 100 | 39 | 1.7 |
| 4 | 95 | 5 | vacuum | 800°C, 30 min | 0.008 | 0.095 | 140 | 43 | 2.2 |
| 5 | 90 | 1 | vacuum | 800°C, 15 min | 0.001 | 0.135 | 90 | 38 | 1.6 |
| 6 | 90 | 3 | vacuum | 800°C, 30 min | 0.005 | 0.110 | 130 | 40 | 1.9 |
| 7 | 90 | 5 | vacuum | 800°C, 30 min | 0.008 | 0.095 | 140 | 41 | 2.2 |
| 8 | 90 | 10 | vacuum | 1200°C, 30 min | 0.15 | 0.130 | 100 | 40 | 1.7 |
| 9 | 90 | 10 | vacuum | 800°C, 120 min | 0.15 | 0.135 | 100 | 40 | 1.7 |
| 10 | 90 | 5 | vacuum | 500°C, 30 min | 0.015 | 0.110 | 130 | 42 | 2.0 |
| 11 | 90 | 5 | NH₃ | 500°C, 30 min | 0.015 | 0.100 | 140 | 42 | 2.1 |
| 12^{*} | 90 | 1 | vacuum | 800°C, 30 min | 0.0005 | 0.150 | 60 | 35 | 1.2 |
| 13* | 90 | 10 | vacuum | 700°C, 30 min | 0.2 | 0.145 , | 60 | 34 | 1.2 |
| 14* | 40 | 5 | vacuum | 800°C, 30 min | 0.008 | 0.160 . | 50 | 32 | 1.1 |
| 15* | 90 | - | vacuum | 800°C, 30 min | - | 0.145 | 58 | 35 | 1.1 |

| | | | | | | | | | |
|---|---|---|---|---|---|---|---|---|---|
| * Comparative example | | | | | | | | | |

Sample numbers 1 to 11 are the cBN sintered bodies of the present invention, which were cBN sintered bodies containing at least 45 wt% cBN component, and they are characterized in that the amount of carbon after the binder material has been removed by acid treatment, that is, the amount of carbon present in the interior of the cBN particles of the cBN sintered body and at the grain boundary of the bonds between cBN particles, is at least 0.001 wt% and no more than 0.15 wt% with respect to the weight of the total cBN component. It is understood that a tool whose part involved in cutting is the cBN sintered body of the present invention, in which the bonding strength between cBN particles and the strength of the cBN particles themselves are expected to be increased, has greatly improved chipping resistance and wear resistance comparing to those of a conventional cBN sintered tool.

The sintered body of sample number 14 did not have adequate cutting performance even though melamine was added and carbon was contained in an amount of 0.008 wt%. The reason for this is understood to be that the cBN component accounted for a small proportion of the cBN sintered body, so the region where the cBN particles could come into contact with each other reduced, and adequate bonds were not produced between the cBN particles.

The sintered body of sample number 13, in which the carbon content was over 0.15 wt%, had diminished mechanical properties and cutting performance. The reason for this is concluded to be either that excess carbon component could not be incorporated into the cBN particles, or that free carbon that could not react with boron and nitrogen was present at the grain boundary.

### Example 2

A binder material powder and a cBN powder with an average particle size of 3 µm were prepared. This binder material powder was produced by mixing 70 wt% of TiN, 15 wt% of Al, and 15 wt% of Ti. A polyamide ([-NH(CH₂)₅CO-]ₙ) powder was mixed into this binder material and cBN powder using a cemented carbide pot and ball, in the amount and under the heat treatment conditions listed in Table 2.
This mixed powder was put into a cemented carbide container to fill up, and the contents were sintered for 30 minutes at a pressure 6.0 GPa and a temperature of 1850°C. This sintered body was analyzed by X-ray diffractometry, and TiN, TiB₂, AIN, Al₂O₃, and the like were identified besides the cBN in all the samples.
The amount of the cBN component contained in the cBN sintered body, and the amount of carbon with respect to the cBN component in the sintered body, were measured in the same manner as in Example 1.
In Table 2, the cBN content refers to the proportion of cBN component contained after sintering, while the polyamide content refers to the amount of polyamide added to the mixed powder prior to sintering.
The sintered bodies of sample numbers 14 and 15 were cBN sintered bodies to which no polyamide powder was added.

Cutting tools having the cBN sintered bodies of the different compositions numbered 1 to 15 in Table 2 for the surface involved in cutting were prepared. All of the cutting tools had an insert shape classified as CNMA 120412 under the ISO numbering system, the blade insert was chamfered to a width of 0.15 mm at an angle of -25°, the cutting edge inclination angle was -5°, the side rake angle was -5°, the front clearance angle was 5° , the side clearance angle was 5° , the end cutting edge angle was 5°, and the side cutting edge angle was -5°. Cutting was evaluated under the following conditions.
The Knoop hardness and fracture toughness were also measured to gauge the mechanical properties of each sample.
Workpiece: a shaft part made of SCR 415H (equivalent to 15Cr3 under the DIN numbering system) were subjected to continuous machining around the outside diameter (carburized layer removal cut)
Hardness of the workpiece: HRc 40 to 60 (there was a hardness distribution from the surface in the depth direction, and the hardness at a cut depth of 1.2 mm was HRc 40)
Cutting speed: V = 110 m/min
Cutting depth: d = 1.2 mm
Feed: f = 0.11 mm/rev
Coolant: emulsion diluted 20 times

In this cutting application, first there are cracks between the cBN particles supposed to be the result of inadequate bonding strength between the cBN particles, and crushing due to inadequate strength of the cBN particles themselves, and as these cracks develop, they ultimately lead to chipping and the end of the tool life.
For all the tools, flank wear was measured 30 minutes after the start of cutting, and the end of tool life was deemed the point when chipping of at least 0.030 mm occurred at the cutting edge. These results are given in Table 2.

**Table 2**

| Smpl. No. | cBN content wt% | Polyamide content wt% | Heat treatment conditions | | After acid treatment: | | Flank wear | Tool life | Hard ness | Fracture toughness |
|---|---|---|---|---|---|---|---|---|---|---|
| | | | | | State | Carbon content | | | | |
| | | | Atmosphere | Temperature, time | | wt% | mm | min | GPa | Mpa·√m |
| 1 | 45 | 4 | vacuum | 1000°C, 30 min | powder | 0.001 | 0.088 | 60 | 35 | 5 |
| 2 | 52 | 4 | vacuum | 1000°C, 30 min | powder | 0.001 | 0.088 | 62 | 36 | 5.5 |
| 3 | 52 | 8 | vacuum | 1000°C, 30 min | block | 0.011 | 0.088 | 75 | 36 | 6 |
| 4 | 60 | 4 | vacuum | 1000°C, 30 min | block | 0.001 | 0.095 | 76 | 37 | 6 |
| 5 | 60 | 6 | vacuum | 1000°C, 30 min | block | 0.007 | 0.090 | 85 | 37 | 6.7 |
| 6 | 60 | 8 | vacuum | 1000°C, 30 min | block | 0.011 | 0.090 | 85 | 37 | 6.7 |
| 7 | 60 | 8 | vacuum | 1000°C, 15 min | block | 0.03 | 0.090 | 80 | 37 | 6.5 |
| 8 | 60 | 8 | NH₃ | 1000°C, 15 min | block | 0.03 | 0.090 | 85 | 37 | 6.6 |
| 9 | 65 | 8 | vacuum | 800°C, 15 min | block | 0.15 | 0.095 | 78 | 38 | 6.5 |
| 10 | 65 | 8 | vacuum | 800°C, 15 min | block | 0.15 | 0.095 | 78 | 38 | 6.5 |
| 11* | 65 | 2 | vacuum | 1000°C, 30 min | powder | 0.0004 | 0.112 | 30 | 34 | 3.5 |
| 12* | 65 | 10 | vacuum | 800°C, 30 min | powder | 0.20 | 0.115 | 30 | 34 | 3.5 |
| 13* | 40 | 4 | vacuum | 1000°C, 30 min | powder | 0.001 | 0.105 | 25 | 32 | 3.5 |
| 14* | 45 | - | vacuum | 1000°C, 30 min | powder | - | 0.110 | 28 | 33 | 3.5 |
| 15* | 65 | - | vacuum | 1000°C, 30 min | powder | - | 0.115 | 30 | 34 | 3.5 |

| | | | | | | | | | | |
|---|---|---|---|---|---|---|---|---|---|---|
| * Comparative example | | | | | | | | | | |

Sample numbers 1 to 10 are the cBN sintered bodies of the present invention, which are cBN sintered bodies containing at least 45 wt% cBN component, and they are characterized in that the amount of carbon after the binder material has been removed by acid treatment, that is, the amount of carbon present in the interior of the cBN particles of the cBN sintered body and at the grain boundary of the bonds between cBN particles, is at least 0.001 wt% and no more than 0.15 wt% with respect to the weight of the total cBN component. It is understood that a tool whose part involved in cutting is the cBN sintered body of the present invention, in which the bonding strength between cBN particles and the strength of the cBN particles themselves are supposed to be increased, has greatly improved chipping resistance and wear resistance comparing to those of a conventional cBN sintered tool.

Of the cBN sintered bodies of the present invention, those of sample numbers 3 to 10, which did not crumble to a powder after the binder material was removed by acid treatment, exhibited particularly good cutting performance, and it is concluded that the added carbon strengthened the cBN particles themselves, and that the bonds between cBN particles was particularly enhanced.

About the sintered bodies of sample numbers 11 and 12, the polyamide was added but the amounts of carbon contained in the cBN component were less than 0.001 wt% and over 0.15 wt%, both of which were outside the range of the present invention. The tool lives were equal to that of sample numbers 14 and 15, which were conventional cBN sintered bodies to which no polyamide was added.

As for the sintered body of sample number 13, the polyamide was added and the carbon content was 0.001% with respect to the total weight of the cBN component, but no improvement in cutting performance was noted. The reason for this is understood that the cBN component accounted for such a small proportion of the cBN sintered body, so the region where the cBN particles could come into contact with each other decreased and adequate bonding did not form between the cBN particles.

### Example 3

To a mixed powder of hBN powder with an average particle size of 0.5 µm and a mesophase carbon powder with a particle size of 0.1 µm or less, 0.5 wt% of polyvinyl alcohol, 0.1 wt% of polyethylene glycol and 0.1 wt% of paraffin with respect to the mixed powder were added. And, the components were mixed in a Teflon(a registered brand) vessel in use of ethanol solvent and allowed to dry naturally, after which a disk-shaped molded article was produced. Several types of molded article were prepared by adjusting the added amount of mesophase carbon powder so that the amount of carbon contained in the molded article would be from 0.003 wt% to not more than 0.5 wt%.
These various hBN molded articles were put in a high-frequency furnace and heat treated for 2 hours in a nitrogen gas atmosphere while being heated to 2000°C. After that, they were put in a tungsten vessel and sintered for 30 minutes at a pressure of 7.5 GPa and a temperature of 2000°C. The structure of the sintered bodies was analyzed by transmission electron microscope, and the products were analyzed by X-ray diffractometry, whereupon cBN with an average particle size of 1 µm was identified for all of the samples, but no tungsten or other metal components were identified. Since no binder material composed of TiN or another such ceramic or cobalt, aluminum or another such metal was added to these sintered bodies, the sintered bodies were treated for 5 hours at about 200°C with concentrated sulfuric acid in a sealed vessel, without removing binder material by the fluoro-nitric acid treatment, thereby removing any free carbon adhering to the surface. The amounts of oxygen and carbon were quantified by ICP, and the remainder was deemed the cBN component and the content of cBN component in the cBN sintered body.
The sintered body of sample number 7 was a cBN sintered body to which no mesophase carbon was added.

Cutting tools having cBN sintered bodies of the different compositions numbered 1 to 7 in Table 3 on the surface involved in cutting were prepared. All of the cutting tools had a insert shape classified as CNMA 120408 under the ISO numbering system, the blade insert was chamfered to a width of 0.15 mm at an angle of -25° , the cutting edge inclination angle was -5° , the side rake angle was -5° , the front clearance angle was 5° , the side clearance angle was 5° , the end cutting edge angle was 5° , and the side cutting edge angle was -5°. Cutting was evaluated under the following conditions.
The mechanical properties of the samples were measured in the same manner as in Example 1, and the thermal conductivity was measured by laser flash method.
Workpiece: a gear part made of SMF 4050 (JIS Z 2550), which was an iron-based sintered part, was subjected to interrupt cutting of the end face
Hardness of the workpiece: Hv 3.0 GPa
Cutting speed: V = 120 m/min
Cutting depth: d = 0.3 mm
Feed: f = 0.1 mm/rev
Coolant: none

In this cutting application, just as in Example 1, flank wear occurs as a result of accumulated drop-out of cBN particles thought to be due to inadequate bonding strength between the cBN particles, and this ultimately results in chipping and the tool reaches the end of its tool life.
With all the tools, flank wear was measured 30 minutes after the start of cutting, and the end of tool life was deemed the point when chipping of at least 0.030 mm occurred at the cutting edge. These results are given in Table 3.

**Table 3**

| Smpl. No. | cBN content | Carbon content in sintered body | Oxygen content in sintered body | Flank wear | Tool life | Hardness | Transverse rupture strength | Thermal conductivity |
|---|---|---|---|---|---|---|---|---|
| | wt% | wt% | wt% | mm | min | GPa | GPa | W/m·K |
| 1* | 99.6495 | 0.0005 | 0.35 | 0.155 | 95 | 54 | 1.8 | 280 |
| 2 | 99.829 | 0.001 | 0.17 | 0.125 | 100 | 56 | 2.1 | 350 |
| 3 | 99.845 | 0.005 | 0.15 | 0.110 | 120 | 57 | 2.6 | 460 |
| 4 | 99.84 | 0.01 | 0.15 | 0.110 | 120 | 57 | 2.7 | 450 |
| 5 | 99.70 | 0.15 | 0.15 | 0.125 | 115 | 56 | 2.5 | 400 |
| 6* | 99.70 | 0.2 | 0.10 | 0.145 | 95 | 54 | 2.0 | 340 |
| 7* | 99.35 | - | 0.65 | 0.155 | 95 | 54 | 1.8 | 250 |

| | | | | | | | | |
|---|---|---|---|---|---|---|---|---|
| * Comparative example | | | | | | | | |

Sample numbers 2 to 5 are the cBN sintered bodies of the present invention, which are cBN sintered bodies containing at least 99.7 wt% cBN component, and they are characterized in that the amount of carbon present in the interior of the cBN particles of the cBN sintered body and at the grain boundary of the bonds between cBN particles is at least 0.001 wt% and no more than 0.15 wt% with respect to the weight of the total cBN component. It is understood that a tool whose portion involved in cutting is the cBN sintered body of the present invention, in which the bonding strength between cBN particles and the strength of the cBN particles themselves are expected to be increased, shows greatly improved chipping resistance and wear resistance comparing to those of a conventional cBN sintered tool.

As for the cBN sintered body of sample number 1, the mesophase carbon was added but the amount of carbon contained in the cBN component was 0.0005 wt%, which was outside the range of the present invention. The tool life was the no better than that of sample number 7, which was a conventional cBN sintered body to which no mesophase carbon was added. cBN sintered body of sample number 6, which had a large carbon content of 0.2 wt% conversely, had diminished mechanical properties and cutting performance. The reason for which is understood to be either that the excess carbon component could not be incorporated into the cBN particles, or that free carbon that could not react with boron and nitrogen was present at the grain boundary.
The oxygen content in the sintered body tended to decrease in all of the samples to which mesophase carbon was added, and it is understood that this decrease in oxygen content is what improved the thermal conduction characteristics, but it is very likely that the reductive effect of the added oxygen also contributed to improved cutting performance, mechanical properties, and thermal characteristic.

### Example 4

A cBN powder with an average particle size of either 1 µm or 3 µm was crushed in an ethanol solvent using a Teflon(a registered brand) pot and ball, the resulting powder was layered with a polyamide ([-NH(CH₂)₅CO-]ₙ) sheet of a thickness of 0.05 to 0.2 mm, and this product was put in a molybdenum vessel to fill up.
The entire vessel was put in a vacuum furnace and heat treated for 2 hours at 1000°C in an NH₃ atmosphere, and then for 1 hour under a vacuum. Then, it was sintered for 30 minutes at a temperature of 2000°C and a pressure of 8.0 GPa.
Each of the sintered bodies was analyzed in the same manner as in Example 3, and just as the cBN powders used as the raw material, cBN with an average particle size of either 1 µm or 3 µm was identified in all of the samples.

The amount of cBN component contained in the cBN sintered body, and the carbon content with respect to the cBN component in the sintered body, were measured in the same manner as in Example 3.
The sintered body of sample number 7 is the cBN sintered body of the present invention, made by the manufacturing method described in Example 3.
The sintered bodies of sample numbers 8 and 9 are conventional cBN sintered bodies in which hBN powders of different particle sizes from each other were used as the starting material, no polyamide sheet was used, and sintering was performed while directly replacing with cBN by the same method and under the same conditions as with sample numbers 1 to 5.

The resulting cBN sintered bodies of different cBN particle size and composition, which are numbered 1 to 9 in Table 4, were used for a surface involved in cutting of cutting tools. All of these tools had an insert shape classified as CNMA 120412 under the ISO numbering system, the blade insert was chamfered to a width of 0.15 mm at an angle of -25° , the cutting edge inclination angle was -5° , the side rake angle was -5° , the front clearance angle was 5° , the side clearance angle was 5° , the end cutting edge angle was 5° , and the side cutting edge angle was -5° . Cutting was evaluated under the following conditions.
The Knoop hardness and fracture toughness were also measured to gauge the mechanical properties of each sample.
Workpiece: an outer spline component (having 25 grooves around the outside of a shaft 30 mm in diameter and 50 mm long) of a shaft part made of SCR 415H (equivalent to 15Cr3 under the DIN numbering system) was subjected to interrupt cutting of the outer diameter machining
Hardness of the workpiece: HRc 58
Cutting speed: V = 200 m/min
Cutting depth: d = 0.2 mm
Feed: f = 0.1 mm/rev
Coolant: none

In this cutting application, crater wear proceeds mechanically as a result of the accumulation of microscopic chipping caused by the propagation of cracks supposed to be due to inadequate bonding strength between the cBN particles and due to crushing of the cBN particles. This decreases the cutting edge wedge angle, which ultimately leads to chipping and the end of the tool life.
The depth of crater wear was measured for all of the tools 10 minutes after the start of cutting, and the end of tool life was deemed the point when chipping of at least 0.030 mm occurred at the cutting edge.
The residual stress characteristics of the sintered body were calculated from the value of the lattice constant of the cBN component by X-ray diffractometry. A negative value for residual stress indicates compression stress.
These results are given in Table 4

**Table 4**

| Smpl. No. | Average particle size of cBN after sintering | cBN content | Carbon content of sintered body | Oxygen content of sintered body | Crater wear depth | Tool life | Hard ness | Residual stress | Fracture toughness |
|---|---|---|---|---|---|---|---|---|---|
| | µm | wt% | wt% | wt% | mm | min | GPa | GPa | MPa·√m |
| 1 | 1 | 99.825 | 0.005 | 0.17 | 0.028 | 60 | 56 | -1.5 | 6.5 |
| 2 | 1 | 99.88 | 0.01 | 0.11 | 0.025 | 62 | 56 | -1.8 | 6.7 |
| 3 | 1 | 99.77 | 0.15 | 0.08 | 0.025 | 62 | 55 | -1.8 | 6.8 |
| 4 | 3 | 99.825 | 0.005 | 0.17 | 0.018 | 65 | 56 | -2.0 | 7.5 |
| 5 | 3 | 99.9 | 0.01 | 0.09 | 0.015 | 70 | 56 | -2.5 | 7.8 |
| 6 | 3 | 99.78 | 0.15 | 0.07 | 0.015 | 70 | 56 | -2.5 | 7.8 |
| 7 | 1 | 99.88 | 0.01 | 0.11 | 0.025 | 60 | 56 | -1.5 | 6.0 |
| 8* | 1 | 99.83 | - | 0.17 | 0.045 | 25 | 54 | -1.2 | 4.5 |
| 9* | 3 | 99.83 | - | 0.17 | 0.040 | 30 | 53 | -1.5 | 5 |

| | | | | | | | | | |
|---|---|---|---|---|---|---|---|---|---|
| * Comparative example | | | | | | | | | |

Sample numbers 1 to 7 are the cBN sintered bodies of the present invention, which are cBN sintered bodies containing at least 99.77 wt% cBN component, and they are characterized in that the amount of carbon present in the interior of the cBN particles of the cBN sintered body and at the grain boundary of the bonds between cBN particles is at least 0.001 wt% and no more than 0.15 wt% with respect to the weight of the total cBN component. It is understood that a tool whose portion involved in cutting is the cBN sintered body of the present invention, in which the bonding strength between cBN particles and the strength of the cBN particles themselves are expected to be increased, shows greatly improved chipping resistance and wear resistance comparing to those of a conventional cBN sintered tool.

The cBN sintered body of the present invention of sample number 2, in which a cBN powder was the starting material, exhibited a higher fracture toughness and a longer tool life than the cBN sintered body of the invention of sample number 7, in which an hBN powder was the starting material. The reason for this is concluded to be the difference in the bonding state at the cBN particle grain boundary and in residual stress, which resulted from the difference between one sintering mechanism involving compacting while directly transforming from hBN to cBN, and the other sintering mechanism involving compacting by the rearrangement of particles by plastic deformation and the crushing of cBN particles.

## Claims

1. A cBN sintered body containing cBN component of at least 45 wt% and not more than 99.9 wt%,
wherein said cBN sintered body comprises carbon of at least 0.001 wt% and not more than 0.15 wt% with respect to the cBN component, in an interior of cBN particles of the cBN sintered body and at a grain boundary between the cBN particles.

2. The cBN sintered body according to Claim 1, comprising a structure in which the cBN component is three-dimensionally bonded together.

3. A cutting tool, in which the cBN sintered body according to Claim 1 or 2 is used for at least a portion involved in cutting.

## Amended claims

### Amended claims under Art. 19.1 PCT

**1.** (Amended) A cBN sintered body containing cBN component of at least 45 wt% and not more than 99.9 wt%,
wherein said cBN sintered body comprises: carbon of at least 0.001 wt% and not more than 0.15 wt% with respect to the cBN component, in an interior of cBN particles of the cBN sintered body and at a grain boundary between the cBN particles; a structure in which the cBN component is three-dimensionally bonded together; and, at least one selected from the group consisting of TiN, TiC, Li, Mg, Ca, WC, Co and Al, as a binder in addition to the cBN component.

**2.** (Amended) A cBN sintered body containing cBN component of at least 45 wt% and not more than 99.9 wt%,
wherein said cBN sintered body comprises: carbon of at least 0.001 wt% and not more than 0.15 wt% with respect to the cBN component, in an interior of cBN particles of the cBN sintered body and at a grain boundary between the cBN particles; a structure in which the cBN component is three-dimensionally bonded together; and, oxygen of not less than 0.07 wt% and not more than 0.17 wt% with respect to a weight of the cBN component, in addition to the cBN component.

**3.** A cutting tool, in which the cBN sintered body according to Claim 1 or 2 is used for at least a portion involved in cutting.
